# EUROPEAN PATENT APPLICATION

(11) **EP 4 708 292 A1**
(43) Date of publication of application: **11.03.2026**
(21) Application number: 25190974.3
(22) Date of filing: 22.07.2025
(51) Int. Cl.: G11B 27/028, G11B 27/031, H04N 23/63, H04N 23/60, H04N 23/951, G06V 10/70, G06V 10/82

(54) **IMAGE CAPTURING APPARATUS, CONTROL METHOD, AND COMPUTER PROGRAM**

(30) Priority: 25.07.2024 JP 2024120333
(71) Applicant: CANON KABUSHIKI KAISHA, Tokyo 146-8501 (JP)
(72) Inventor: ISHIKAWA, Ryo, Tokyo, 146-8501 (JP)
(74) Representative: TBK

(57) **Abstract**

There is provided an image capturing apparatus. Shooting means shoots at least one first image that is not to be recorded in a nonvolatile storage, and a second image that is to be recorded in the nonvolatile storage. Generation means generates verbal information that describes content of the second image based on the second image and on one or more first images that satisfy one or more conditions among the at least one first image.

## Description

### TECHNICAL FIELD

The present disclosure relates to an image capturing apparatus, a control method, and a computer program.

### BACKGROUND

A technique to generate a summary (caption) of an image using a neural network has been known. Japanese Patent Laid-Open No. 2020-13427 discloses a technique to increase the accuracy of generation of a caption by extracting an overall feature and a partial feature from an image, specifying a region of interest from these two features, and adding a weight to the region of interest.

### SUMMARY

As information obtained from one image is limited, there is a possibility that a caption that describes the content of an image with high accuracy cannot necessarily be generated with the technique of Japanese Patent Laid-Open No. 2020-13427, depending on the content of the image.

At least a part of aspects of the present disclosure provides a technique to improve the accuracy of generation of verbal information that describes the content of an image.

The present disclosure in its first aspect provides an image capturing apparatus as specified in claim 1. Optional features are specified in claims 2 to 12.

The present disclosure in its second aspect provides an image capturing apparatus as specified in claim 13.

The present disclosure in its third aspect provides a control method as specified in claim 14.

The present disclosure in its fourth aspect provides a control method as specified in claim 15.

The present disclosure in its fifth aspect provides a computer program as specified in claim 16.

The present disclosure in its sixth aspect provides a computer program as specified in claim 17.

Features of the present disclosure will become apparent from the following description of embodiments with reference to the attached drawings. The following description of embodiments are described by way of example.

### BRIEF DESCRIPTION OF THE DRAWINGS

FIG. 1 is a diagram showing an example of a hardware configuration of an image capturing apparatus 100.
FIG. 2 is a diagram showing a configuration of a function of generating a caption of a recording image in the image capturing apparatus 100.
FIG. 3 is a conceptual diagram showing a relationship between a recording image and one or more non-recording images used in generation of a caption according to a first embodiment.
FIG. 4A is a flowchart of shooting processing executed by a CPU 102 according to the first embodiment.
FIG. 4B is a flowchart of caption generation processing executed by an input control unit 201 and a caption generation unit 202 according to the first embodiment.
FIG. 5 is a conceptual diagram showing a relationship between a recording image and one or more non-recording images used in generation of a caption according to a second embodiment.
FIG. 6A is a flowchart of shooting processing executed by the CPU 102 according to the second embodiment.
FIG. 6B is a flowchart of caption generation processing executed by the input control unit 201 and the caption generation unit 202 according to the second embodiment and a third embodiment.
FIG. 7 is a conceptual diagram showing a relationship between a recording image and one or more non-recording images used in generation of a caption according to the third embodiment.
FIG. 8 is a flowchart of caption generation processing executed by the input control unit 201 and the caption generation unit 202 according to the third embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### [First Embodiment]

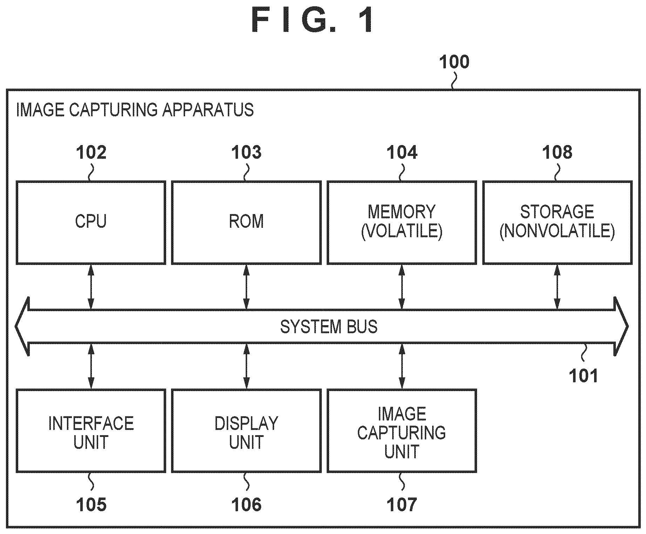

FIG. 1 is a diagram showing an example of a hardware configuration of an image capturing apparatus 100. A CPU 102, a ROM 103, a memory 104, an interface unit 105, a display unit 106, an image capturing unit 107, and a storage 108 are connected to a system bus 101 in the image capturing apparatus 100. Each unit connected to the system bus 101 is configured to be capable of mutually exchange data via the system bus 101.

The ROM 103 stores, for example, various types of programs for operations of the CPU 102. Note that the location of storage of various types of programs for operations of the CPU 102 is not limited to the ROM 103, and may be, for example, a hard disk drive and the like.

The memory 104 is a volatile memory, and is composed of, for example, a RAM. The CPU 102 operates in accordance with the programs stored in the ROM 103, and uses the memory 104 as a working memory.

The interface unit 105 accepts a user operation, generates a control signal corresponding to the operation, and supplies the control signal to the CPU 102. For example, the interface unit 105 includes physical operation buttons, a touch panel, and the like as input devices that accept a user operation. Note that the touch panel is an input device configured to output coordinate information corresponding to a position that has been touched on an input unit that is configured in a planar fashion, for example.

The CPU 102 controls each unit, including the display unit 106 and the image capturing unit 107, in accordance with the programs based on a control signal that is supplied in accordance with a user operation performed via the interface unit 105. As a result, the CPU 102 can cause the display unit 106 and the image capturing unit 107 to operate in accordance with the user operation.

The display unit 106 includes, for example, a display. The display unit 106 includes a mechanism that outputs a display signal for causing the display to display an image. Note that in a case where the interface unit 105 includes the touch panel, the touch panel and the display can be configured integrally. For example, the touch panel is configured so that a light transmittance thereof does not interfere with items displayed on the display, and is attached to a top layer of a display surface of the display. Also, the touch panel that functions as the interface unit 105 can be configured by associating input coordinates on the touch panel with display coordinates on the display.

The image capturing unit 107 includes a lens, a shutter with a diaphragm function, an image sensor (a CCD, a CMOS, or the like) that converts an optical image into electrical signals, and the like. Also, the image capturing unit 107 includes an image processing unit that executes various types of image processing, such as exposure control and range-finding control, based on signals of the image sensor, and is configured to execute a series of shooting processing. The image capturing unit 107 can perform shooting in accordance with a user operation performed via the interface unit 105 under control of the CPU 102.

The storage 108 is a nonvolatile storage, and is composed of, for example, a memory card. The memory card may be attachable to and removable from the image capturing apparatus 100.

The image capturing apparatus 100 can shoot (obtain) images for recording (which may hereinafter be also referred to as "recording images"), and images that are not for recording (which may hereinafter be also referred to as "non-recording images"), with use of the image capturing unit 107. A recording image is an image that is obtained in accordance with a user instruction obtained via, for example, the interface unit 105, and is recorded (saved) in the nonvolatile storage 108. Also, a recording image may be temporarily recorded (saved) in the volatile memory 104 before it is recorded in the storage 108. A non-recording image is an image that is temporarily required for the reason that the image is displayed on, for example, the display unit 106, the image is used in calculation of shooting parameters, and the like, and includes a live-view image (LV image), for example. A non-recording image is temporarily recorded in the volatile memory 104, but is not recorded in the nonvolatile storage 108.

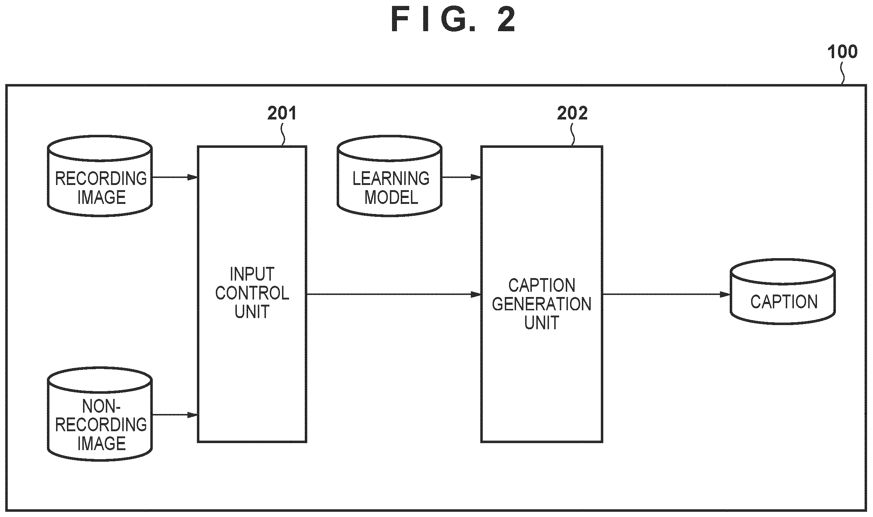

FIG. 2 is a diagram showing a configuration of a function of generating a caption of a recording image in the image capturing apparatus 100. As shown in FIG. 2, the image capturing apparatus 100 includes an input control unit 201 and a caption generation unit 202.

The input control unit 201 obtains a recording image shot by the image capturing unit 107 from the storage 108 (or the memory 104), and inputs the same to the caption generation unit 202. Also, the input control unit 201 obtains a non-recording image shot by the image capturing unit 107 from the memory 104, and inputs the same to the caption generation unit 202. The functions of the input control unit 201 are realized by the CPU 102 executing a program.

Based on a recording image and one or more non-recording images input from the input control unit 201, the caption generation unit 202 generates verbal information that describes the content of the recording image. In the present embodiment, it is assumed that a so-called caption is generated as verbal information that describes the content of a recording image.

A method of generating a caption is not limited in particular, and any method can be used as long as it is a method based on a recording image and one or more non-recording images input from the input control unit 201. For example, the caption generation unit 202 can generate a caption through inference processing that uses a neural network, or rule-based inference processing.

In the description of the present embodiment, it is assumed that the caption generation unit 202 generates a caption through inference processing that uses a neural network. A learning model is stored in advance in the ROM 103. This learning model is a machine learning model that receives a recording image and one or more non-recording images as inputs, and has been trained by using a caption of the recording image corresponding thereto as supervisory data. The caption generation unit 202 infers (generates) a caption of the recording image by obtaining the learning model from the ROM 103, and inputting the recording image and one or more non-recording images input from the input control unit 201 to the learning model.

The functions of the caption generation unit 202 are realized by the CPU 102 executing a program. Alternatively, the image capturing apparatus 100 may include a graphics processing unit (GPU), and may realize the functions of the caption generation unit 202 as a result of the CPU 102 and the GPU executing processing in coordination with each other in accordance with a program.

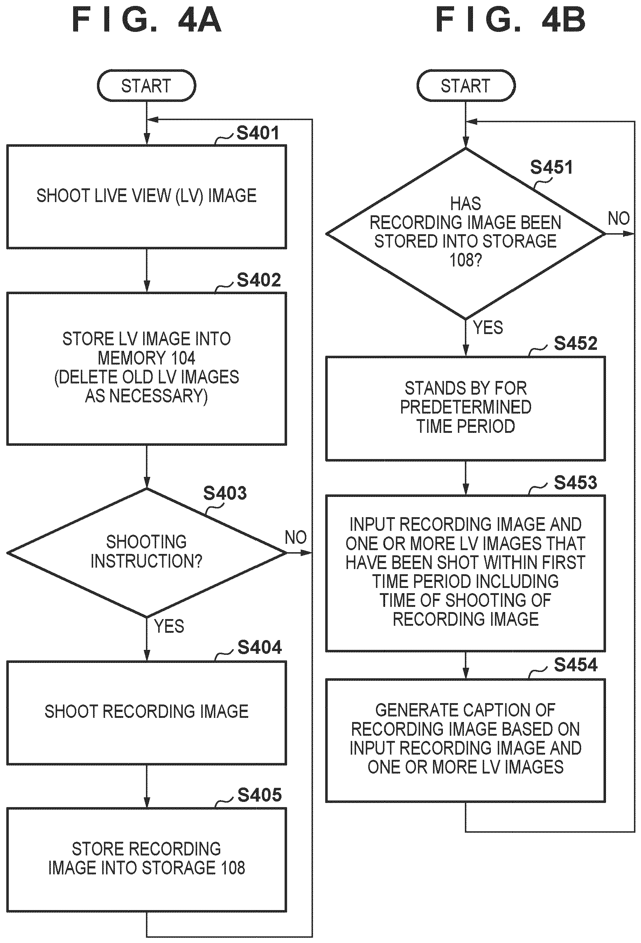

The specific content of processing of the input control unit 201 and the caption generation unit 202 will be described later using FIG. 4B.

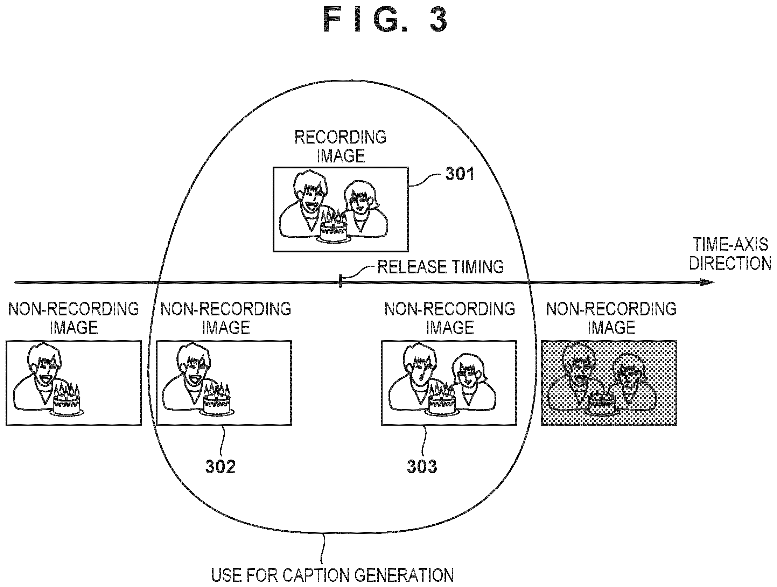

FIG. 3 is a conceptual diagram showing a relationship between a recording image and one or more non-recording images used in generation of a caption according to the first embodiment. In FIG. 3, time passes from left to right. The image capturing apparatus 100 is shooting a plurality of non-recording images to be displayed on the display unit 106 as LV images, and one recording image corresponding to a shooting instruction from a user.

With conventional techniques, a caption of the recording image is generated based on this recording image. However, in the example of FIG. 3, it is not easy to distinguish which one of the two people included in a recording image 301 is trying to blow out the candles, and thus a caption cannot be generated with high accuracy.

In the present embodiment, not only the recording image 301, but also one or more non-recording images that have been shot within a predetermined time period including the time of shooting of the recording image, are used in generation of a caption. In the example of FIG. 3, two non-recording images (non-recording images 302 and 303) that have been shot before and after the recording image are used as one or more non-recording images. The non-recording image 302 shows only the person on the left among the two people included in the recording image 301. In the non-recording image 303, the act of the person on the left blowing on the candles is shown more clearly than in the recording image 301. Therefore, it is possible to judge that the person on the left is a more important subject in the scene of the recording image 301, and a highly accurate caption with an emphasis on the person on the left can be generated.

FIG. 4A is a flowchart of shooting processing executed by the CPU 102 according to the first embodiment. The CPU 102 executes processing of the present flowchart in accordance with a program stored in the ROM 103. The CPU 102 starts processing of the present flowchart when an operation mode of the image capturing apparatus 100 has been set to a shooting mode by a user operation performed via the interface unit 105.

In step S401, the CPU 102 shoots an LV image with use of the image capturing unit 107.

In step S402, the CPU 102 stores (records) the LV image shot in step S401 into the memory 104. Also, the CPU 102 may delete old LV images stored in the memory 104 (LV images that have no possibility of being used in generation of a caption) as necessary (e.g., in a case where the remaining capacity of the memory 104 is small).

In step S403, the CPU 102 determines whether a shooting instruction has been input from the interface unit 105. In a case where a shooting instruction has been input, processing proceeds to step S404. In a case where a shooting instruction has not been input, processing returns to step S401. Therefore, an LV image is shot repeatedly until a shooting instruction is input.

In step S404, the CPU 102 shoots a recording image with use of the image capturing unit 107.

In step S405, the CPU 102 stores the recording image shot in step S404 into the storage 108. Thereafter, processing returns to step S401. Therefore, after the recording image has been shot, an LV image is shot repeatedly until a shooting instruction is input again.

FIG. 4B is a flowchart of caption generation processing executed by the input control unit 201 and the caption generation unit 202 according to the first embodiment. The caption generation processing of FIG. 4B is executed in parallel with the shooting processing of FIG. 4A.

In step S451, the input control unit 201 determines whether a recording image has been stored into the storage 108. The input control unit 201 repeats the determination in step S451 until a recording image is stored into the storage 108. Once a recording image has been stored into the storage 108 (i.e., once a recording image has been stored in step S405 of FIG. 4A), processing proceeds to step S452.

In step S452, the input control unit 201 stands by for a predetermined time period. During the standby in step S452, the shooting processing of FIG. 4A is executed in parallel, and thus an LV image is shot and stored into the memory 104 repeatedly. Note that in a case where LV images shot after the recording image are not used in generation of a caption (in a case where a later-described first time period does not include a time period after the time of shooting of the recording image), processing of step S452 is unnecessary.

In step S453, the input control unit 201 obtains the recording image (e.g., the recording image 301 shown in FIG. 3) from the storage 108, and inputs the same to the caption generation unit 202. Also, the input control unit 201 obtains, from the memory 104, one or more LV images (e.g., the non-recording images 302 and 303 shown in FIG. 3) that have been shot within the first time period including the time of shooting of the recording image among at least one LV image stored in the memory 104, and inputs the same to the caption generation unit 202. Examples of the "first time period including the time of shooting of the recording image" mentioned here include a time period from 0.05 seconds before the shooting of the recording image to 0.05 seconds after the shooting of the recording image, a time period from 0.05 seconds before the shooting of the recording image to the time of shooting of the recording image, and the like.

In step S454, based on the recording image and one or more non-recording images input from the input control unit 201, the caption generation unit 202 generates a caption of the recording image. As stated earlier, the caption generation unit 202 can infer the caption by inputting, to the learning model, the recording image and one or more non-recording images input from the input control unit 201. Thereafter, processing returns to step S451. Therefore, each time a new recording image is stored into the storage 108, a corresponding caption is generated.

In the above description, a recording image is assumed to be a still image. However, a recording image may be a moving image. In a case where a recording image is a moving image, the recording image is a group of recording still images (a group of frames), and LV images obtained before the start of recording of the moving image and after the end of recording of the moving image are non-recording images. Therefore, the input control unit 201 inputs the recording image, which is the moving image, and one or more LV images to the caption generation unit 202. Based on the recording image, which is the moving image, and on one or more LV images, the caption generation unit 202 generates a caption for the recording image. In this case, the caption generation unit 202 may generate one caption for the entire moving image, or may generate captions for respective frames of the moving image.

As described above, according to the first embodiment, the image capturing apparatus 100 shoots at least one non-recording image (e.g., LV image) that is not to be recorded in the nonvolatile storage 108, and a recording image that is to be recorded in the nonvolatile storage 108. Then, the image capturing apparatus 100 generates verbal information (e.g., a caption) that describes the content of the recording image based on the recording image and on one or more non-recording images that satisfy one or more conditions among the at least one non-recording image.

As described above, according to the first embodiment, the verbal information that describes the content of the recording image is generated based on not only the recording image, but also one or more non-recording images that satisfy one or more conditions. Therefore, according to the present embodiment, the accuracy of generation of the verbal information that describes the content of the recording image can be improved.

Note that "one or more conditions" mentioned here have a role as criteria for selection of one or more non-recording images used in generation of the verbal information. Although the contents of "one or more conditions" are not limited in particular, further improvement in the accuracy of generation of the verbal information is expected if a condition(s) is used that improves the possibility of use of non-recording images that are highly relevant to the content of the recording image. The example that has been described with reference to FIG. 4B uses the condition that one or more non-recording images have been shot within the first time period including the time of shooting of the recording image (e.g., within a time period from 0.05 seconds before the shooting of the recording image to 0.05 seconds after the shooting of the recording image, or within a time period from 0.05 seconds before the shooting of the recording image to the time of shooting of the recording image). As non-recording images that satisfy such a condition are expected to be relatively highly relevant to the content of the recording image, further improvement in the accuracy of generation of the verbal information is expected.

### [Second Embodiment]

The first embodiment has been described in relation to the condition that one or more non-recording images have been shot within the first time period including the time of shooting of the recording image (which may hereinafter be also referred to as "condition 1"), as an example of "one or more conditions" that have a role as criteria for selection of one or more non-recording images used in generation of a caption. A second embodiment will be described in relation to another example related to "one or more conditions". In the second embodiment, the basic configuration of the image capturing apparatus 100 is similar to that of the first embodiment. The following mainly describes the differences from the first embodiment.

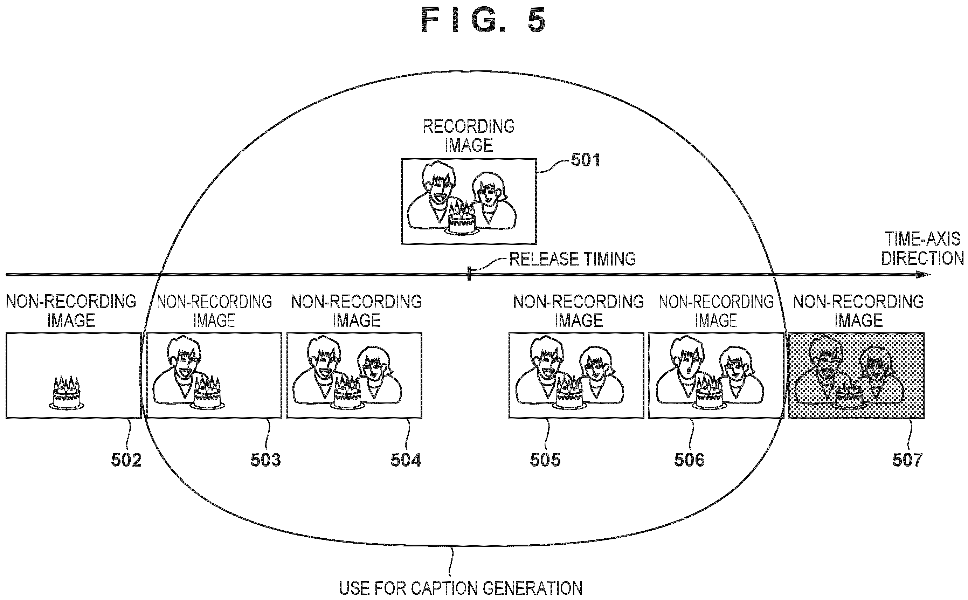

FIG. 5 is a conceptual diagram showing a relationship between a recording image and one or more non-recording images used in generation of a caption according to the second embodiment. In FIG. 5, time passes from left to right. The image capturing apparatus 100 is shooting a plurality of non-recording images to be displayed on the display unit 106 as LV images, and one recording image corresponding to a shooting instruction from a user.

In the present embodiment, one or more non-recording images used in generation of a caption are selected so as to satisfy both of a condition that each of the one or more non-recording images includes a priority subject (a predetermined subject) (which may hereinafter be also referred to as "condition 2"), and a condition that the one or more non-recording images have been shot within a second time period (which may hereinafter be also referred to as "condition 3"). The second time period is a time period which includes the time of shooting of the recording image, and in which the priority subject has been continuously detected.

The priority subject is a subject that is preferentially taken into consideration when generating a caption. Although a method of selecting the priority subject is not limited in particular, for example, the user can select the priority subject in advance from among recording images that have been shot before and stored in the storage 108. In this case, the user selects desired recording images by operating the interface unit 105, and selects a desired subject as the priority subject from among the selected recording images. The CPU 102 stores priority subject information that indicates the priority subject selected by the user into the ROM 103. A specific method for detecting the priority subject from LV images is not limited in particular; for example, a method based on any known technique, such as pattern matching, can be used.

In the example of FIG. 5, it is assumed that the person on the left in the recording image 301 (FIG. 3), which was shot before, has been selected in advance as the priority subject. In this case, the priority subject is detected in non-recording images 503 to 506. Therefore, the non-recording images 503 to 506 satisfy condition 2. Note that although a non-recording image 507 actually includes the priority subject, it has been determined that the non-recording image 507 does not include the priority subject because detection of the priority subject has failed therein due to low luminance.

Also, a time period in which the non-recording images 503 to 506 were shot includes the time of shooting of the recording image 501, and the priority subject has been continuously detected in this time period. Therefore, the non-recording images 503 to 506 satisfy condition 3. Note that even if a non-recording image that was shot before the non-recording image 502 includes the priority subject, this non-recording image does not satisfy condition 3 because a non-recording image 502, from which the priority subject has not been detected, exists between this non-recording image and the non-recording image 503.

As described above, according to the example of FIG. 5, the non-recording images 503 to 506 that satisfy "one or more conditions" including condition 2 and condition 3 are used to generate a caption.

Here, consider a case where the non-recording images 504 and 505 satisfy condition 1, which has been described in the first embodiment, in the example of FIG. 5. In this case, as a change between the recording image 501 and the non-recording images 504 and 505 is small, there is a possibility that the accuracy of the caption is not improved much even if the non-recording images 504 and 505 are used. On the other hand, according to the second embodiment, the non-recording image 506 that exhibits a relatively large change from the recording image 501 is used because "one or more conditions" including condition 2 and condition 3 are used; therefore, improvement in the accuracy of the caption can be expected.

Note that it is not indispensable to use both of condition 2 and condition 3. For example, it is permissible to adopt a configuration in which one or more LV images that satisfy condition 2 are selected as one or more LV images used in generation of the caption.

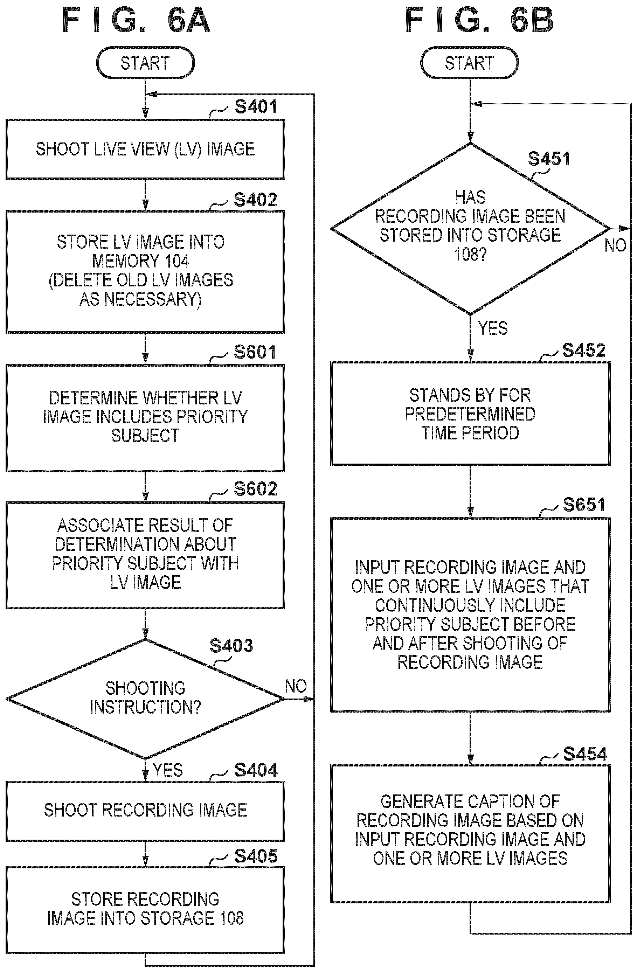

FIG. 6A is a flowchart of shooting processing executed by the CPU 102 according to the second embodiment. The CPU 102 executes processing of the present flowchart in accordance with a program stored in the ROM 103. The CPU 102 starts processing of the present flowchart when an operation mode of the image capturing apparatus 100 has been set to a shooting mode by a user operation performed via the interface unit 105.

In step S601, the CPU 102 determines whether the LV image shot in step S401 includes a priority subject.

In step S602, the CPU 102 associates the result of determination about the priority subject that was made in step S601 (information indicating whether the LV image includes the priority subject) with the LV image.

FIG. 6B is a flowchart of caption generation processing executed by the input control unit 201 and the caption generation unit 202 according to the second embodiment. The caption generation processing of FIG. 6B is executed in parallel with the shooting processing of FIG. 6A.

In step S653, the input control unit 201 obtains the recording image (e.g., the recording image 501 shown in FIG. 5) from the storage 108, and inputs the same to the caption generation unit 202. Also, the input control unit 201 obtains, from the memory 104, one or more LV images that continuously include the priority subject before and after the shooting of the recording image (i.e., one or more LV images that satisfy condition 2 and condition 3) (e.g., the non-recording images 502 to 506 shown in FIG. 5) among at least one LV image stored in the memory 104, and inputs them to the caption generation unit 202. The input control unit 201 can identify one or more LV images that satisfy condition 2 and condition 3 based on the results of determination that have been associated with the respective LV images in step S602 of FIG. 6A.

Note that in a case where there is no LV image that satisfies condition 2 and condition 3, the input control unit 201 may input one or more LV images that satisfy condition 1 to the caption generation unit 202, similarly to the first embodiment.

Also, in a case where an LV image that does not include the priority subject has been shot while the input control unit 201 is standing by in step S452, the input control unit 201 may end the standby, and cause processing to proceed to step S651. This is because, in a case where an LV image that does not include the priority subject has been shot, an LV image(s) that is shot thereafter does not satisfy both of condition 2 and condition 3.

Note that although the above has described condition 2 and condition 3 as examples of "one or more conditions" that have a role as criteria for selection of one or more non-recording images used in generation of a caption, it is also possible to further use another condition.

For example, the image capturing apparatus 100 may include a line-of-sight sensor (not shown), and the CPU 102 may calculate degrees of gaze of the user from information of the line-of-sight sensor. The degrees of gaze mentioned here are numerical values calculated from line-of-sight information of the user, and indicate the extents to which the user was looking at respective subjects. For example, in step S601 of FIG. 6A, the CPU 102 obtains line-of-sight information of the user from the line-of-sight sensor provided on, for example, the display unit 106, carries out segmentation processing and recognition processing for a person, a substance, and the like with respect to the LV image, and identifies subjects shown in the LV image. Then, the CPU 102 calculates time periods in which the user was looking at the respective subjects as the degrees of gaze with use of the obtained line-of-sight information, and determines whether the degrees of gaze are equal to or higher than a first threshold. In step S602, the CPU 102 associates the result of determination about the degrees of gaze with the LV image. In step S653 of FIG. 6B, the input control unit 201 selects one or more LV images to be used in generation of the caption so as to satisfy a condition that the degrees of gaze of each of one or more LV images are equal to or higher than the first threshold (which may hereinafter be also referred to as "condition 4"). In this way, the start of shooting can be predicted by using the movements of the line of sight of the user even before a shooting instruction is input, and the accuracy of generation of the caption can be improved while restricting the number of frames of LV images to be used.

Note that although a time period in which the user was looking is used as a degree of gaze here, coefficients may be set in advance for attributes of segmentation, such as a person and an animal, and a product of a time period in which the user was looking and a coefficient may be used as a degree of gaze.

As another example, it is also possible to use a condition that takes into consideration the fact that the image capturing apparatus 100 has transitioned to a state of preparation for shooting of a recording image. Specifically, the image capturing apparatus 100 includes a shooting button (not shown) as an operation member. The CPU 102 causes the image capturing apparatus 100 to transition to the state of preparation for shooting of a recording image in response to a predetermined user operation performed on the shooting button. In a case where the shooting button is a button that has a half-pressed state and a full-pressed state, a half-pressing operation corresponds to the predetermined user operation, and a full-pressing operation corresponds to a shooting instruction. In step S601 of FIG. 6A, the CPU 102 determines whether the image capturing apparatus 100 is in the state of preparation for shooting. In step S602, the CPU 102 associates the result of determination about the state of preparation for shooting with the LV image. In step S653 of FIG. 6B, the input control unit 201 selects one or more LV images to be used in generation of the caption so as to satisfy a condition that one or more LV images have been shot within a third time period (which may hereinafter be also referred to as "condition 5"). The third time period is a time period from the transition to the latest state of preparation for shooting before shooting of a recording image. In the example of FIG. 5, if the image capturing apparatus is in the state of preparation for shooting at the time of shooting of the non-recording images 503 to 506, the non-recording images 503 to 506 are selected as one or more LV images that satisfy the fifth condition. Alternatively, the third time period may be a time period from the transition to the latest state of preparation for shooting before shooting of a recording image to shooting of the recording image. In this case, in the example of FIG. 5, even if the image capturing apparatus is in the state of preparation for shooting at the time of shooting of the non-recording images 503 to 506, the non-recording images 505 and 506 do not satisfy the fifth condition, and the non-recording images 503 and 504 are selected as one or more LV images that satisfy the fifth condition. Similarly to a case where the aforementioned condition 4 is used, also in a case where condition 5 is used, the start of shooting can be predicted even before a shooting instruction is input, and thus the accuracy of generation of a caption can be improved while restricting the number of frames of LV images to be used.

Note that condition 1 described in the first embodiment and conditions 2 to 5 described in the second embodiment can be combined as appropriate, as long as there are no technical contradictions. As one example, it is possible to adopt a configuration that selects one or more LV images that satisfy "one or more conditions" including condition 1 and condition 5 as one or more LV images to be used in generation of a caption.

As described above, the accuracy of generation of verbal information that describes the content of a recording image can be improved by using, as appropriate, various conditions as "one or more conditions" that have a role as criteria for selection of one or more non-recording images used in generation of a caption.

### [Third Embodiment]

The second embodiment has been described in relation to a configuration in which one or more LV images that satisfy "one or more conditions" are used in generation of a caption. A third embodiment will be described in relation to a configuration in which, in a case where a plurality of LV images satisfy "one or more conditions", a part of the plurality of LV images that satisfy one or more conditions is excluded, and the remaining one or more LV images are used in generation of a caption. In the third embodiment, the basic configuration of the image capturing apparatus 100 is similar to that of the second embodiment. The following mainly describes the differences from the second embodiment.

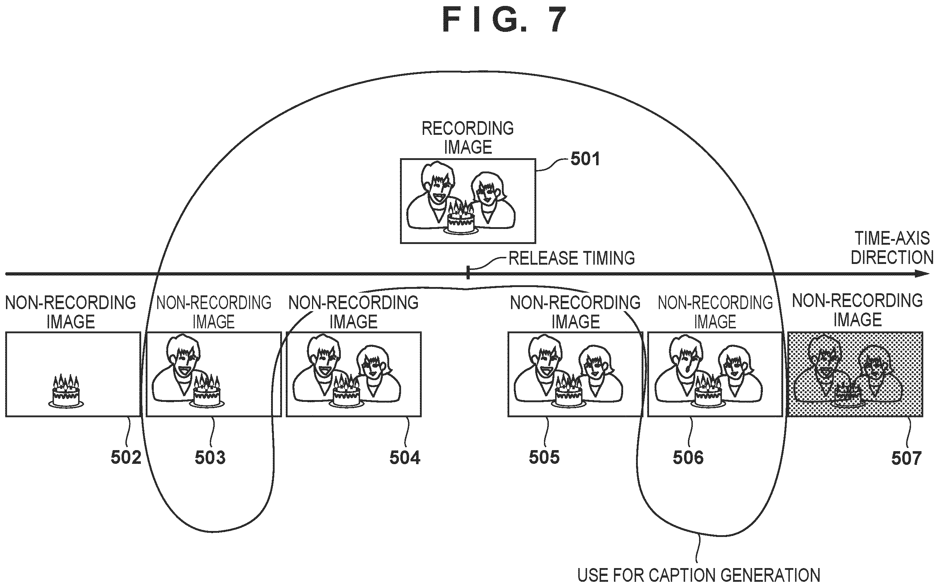

FIG. 7 is a conceptual diagram showing a relationship between a recording image and one or more non-recording images used in generation of a caption according to the third embodiment. Although FIG. 7 is substantially the same as FIG. 5 described in the second embodiment, it is different from FIG. 5 in that the non-recording images 504 and 505 are not used in generation of a caption.

As stated earlier, the accuracy of generation of a caption can be improved by generating a caption of a recording image based on non-recording images in addition to the recording image. However, in a case where a change between images is small for the reason of, for example, a low subject speed, the amount of additional information obtained from one non-recording image is small. In the example of FIG. 7, as the non-recording images 504 and 505 that exist before and after the recording image 501 exhibit a small difference from the recording image 501, the amount of additional information obtained from the non-recording images 504 and 505 (information that cannot be obtained only from the recording image 501) is small. In this case, even if the non-recording images 504 and 505 are used, there is little expectation that the accuracy of generation of a caption is improved, and a processing load is unnecessarily increased.

In view of this, in the third embodiment, processing for excluding a part of a plurality of LV images that satisfy one or more conditions (in the example of FIG. 7, excluding the non-recording images 504 and 505 among the non-recording images 503 to 506) is executed. As a result, the accuracy of generation of a caption can be improved while suppressing an unnecessary increase in a processing load.

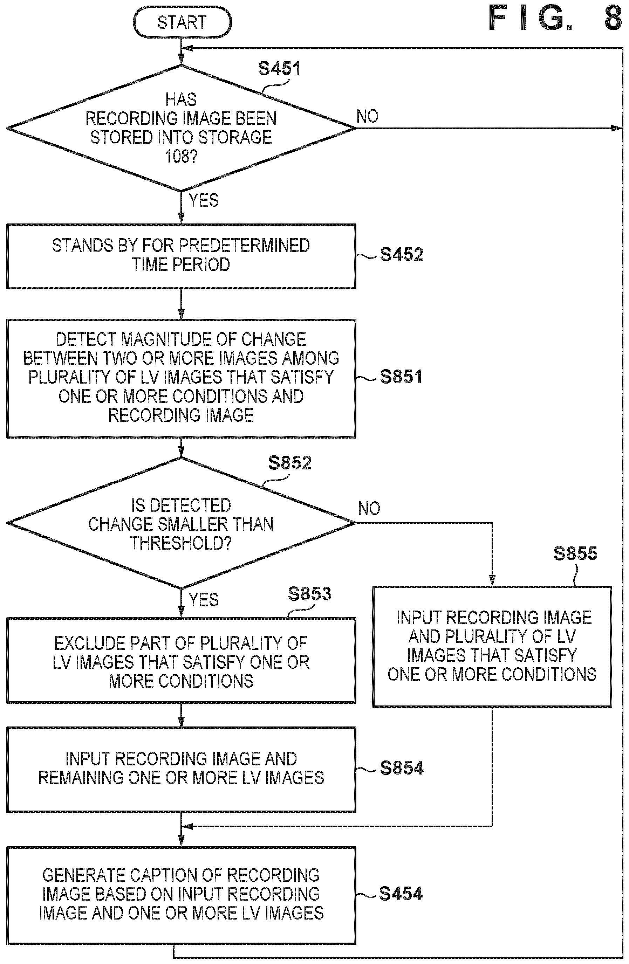

FIG. 8 is a flowchart of caption generation processing executed by the input control unit 201 and the caption generation unit 202 according to the third embodiment. The caption generation processing of FIG. 8 is executed in parallel with the shooting processing of FIG. 6A. That is to say, the shooting processing according to the third embodiment is similar to that of the second embodiment.

In step S851, the input control unit 201 detects (calculates) a magnitude of change between two or more images among a plurality of LV images that satisfy one or more conditions and a recording image. In the following description, it is assumed that one or more conditions include condition 2 and condition 3 described in the second embodiment, and the person on the left in the recording image 301 (FIG. 3), which was shot before, has been selected as a priority subject in advance. Therefore, in the example of FIG. 7, the non-recording images 503 to 506 correspond to "the plurality of LV images that satisfy one or more conditions".

The "magnitude of change" detected (calculated) in step S851 is not limited in particular, as long as it acts as an index for the possibility that the plurality of LV images that satisfy one or more conditions include an LV image that has a low possibility of contributing to improvement in the accuracy of generation of a caption. It is assumed here that the input control unit 201 calculates the speed of the priority subject as the "magnitude of change". The speed calculated here is, for example, the speed of the priority subject at the time of shooting of the recording image. In this case, the input control unit 201 can use the recording image and an LV image that was shot immediately before the recording image (in the example of FIG. 7, the recording image 501 and the non-recording image 504) as "two or more images among the plurality of LV images that satisfy one or more conditions and the recording image". Alternatively, the speed calculated here may be an average speed of the priority subject throughout the entire time period of shooting of the plurality of LV images that satisfy one or more conditions. In this case, the input control unit 201 can use the recording image 501 and the non-recording images 503 to 506 as "two or more images among the plurality of LV images that satisfy one or more conditions and the recording image". The speed of the priority subject can be calculated by, for example, detecting motion vectors of the priority subject between images.

Note that in a case where there is only one LV image that satisfies one or more conditions, the input control unit 201 skips steps S851 and S852, and causes processing to proceed from step S452 to step S855.

In step S852, the input control unit 201 determines whether the change detected in step S851 (here, the speed of the priority subject) is smaller than a second threshold. In a case where the detected change is smaller than the second threshold, processing proceeds to step S853; otherwise, processing proceeds to step S855.

In step S853, the input control unit 201 excludes a part of the plurality of LV images that satisfy one or more conditions (the non-recording images 503 to 506). Although an exclusion method is not limited in particular, for example, the input control unit 201 may simply exclude LV images at a constant interval, or may exclude LV images based on a magnitude of a pixel difference between the recording image and each LV image.

In a case where LV images are excluded simply at a constant interval, for example, the input control unit 201 excludes one LV image for every two LV images.

In a case where LV images are excluded based on the magnitude of the pixel difference between the recording image and each LV image, the input control unit 201 detects the pixel difference between the recording image and each LV image. Then, in a case where the pixel difference is smaller than a predetermined difference (a third threshold), the input control unit 201 excludes the corresponding LV image(s). In this case, the non-recording images 504 and 505 are excluded in the example of FIG. 7.

As another example, the input control unit 201 may adjust the number of LV images to be excluded in accordance with the magnitude of change calculated in step S851 (the speed of the priority subject). More specifically, the input control unit 201 may increase the number of "the part of the plurality of LV images" to be excluded as the change calculated in step S851 decreases. For example, the input control unit 201 may exclude one LV image for every two LV images in a case where the speed is equal to or higher than a predetermined speed, and exclude two LV images for every three LV images in a case where the speed is lower than the predetermined speed. Note that the "predetermined speed" used here is a speed lower than the "second threshold" used in step S852. Also, the speed used here is the average speed of the priority subject throughout the entire time period of shooting of the plurality of LV images that satisfy one or more conditions.

Furthermore, the input control unit 201 may change a range of exclusion of LV images in accordance with the extent of the speed calculated in step S851. For example, the input control unit 201 may exclude one LV image that precedes the recording image and one LV image that succeed the recording image in a case where the speed exceeds a first speed, exclude two LV images that precede the recording image and two LV images that succeed the recording image in a case where the speed does not exceed the first speed but exceeds a second speed, and exclude three LV images that precede the recording image and three LV images that succeed the recording image in a case where the speed does not exceed the second speed.

In step S854, the input control unit 201 inputs, to the caption generation unit 202, the recording image and the remaining one or more LV images (one or more LV images that were not excluded in step S853 among the plurality of LV images that satisfy one or more conditions).

Note that in the example of FIG. 8, processing for judging whether the change detected in step S851 (e.g., the speed of the priority subject) is smaller than the second threshold is executed in step S852. However, step S852 can be omitted. In this case, in step S853 that follows step S851, the input control unit 201 can exclude a part of the plurality of LV images as appropriate in accordance with the change detected in step S851 (e.g., the speed of the priority subject).

As described above, according to the third embodiment, in a case where a plurality of LV images satisfy one or more conditions, the image capturing apparatus 100 detects a magnitude of change between two or more images among the plurality of LV images and a recording image. In a case where the change is smaller than the second threshold, the image capturing apparatus 100 generates a caption of the recording image based on the recording image and on one or more LV images remaining after excluding (removing) a part of the plurality of LV images. Therefore, according to the present embodiment, the accuracy of generation of a caption can be improved while suppressing an unnecessary increase in a processing load.

Note that in step S851 of FIG. 8, the input control unit 201 may detect a magnitude of change between each of the plurality of LV images that satisfy one or more conditions and the recording image (e.g., a pixel difference). In this case, the input control unit 201 may cause processing to proceed from step S851 to step S853, and exclude a part of the plurality of LV images based on the magnitude of change between each LV image and the recording image. For example, the magnitude of change exhibited by each of the part of the plurality of LV images excluded here is smaller than the third threshold. That is to say, the input control unit 201 may exclude LV images that exhibit a change (e.g., a pixel difference) smaller than the third threshold with respect to the recording image.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An image capturing apparatus (100), comprising:
shooting means (102) configured to shoot at least one first image that is not to be recorded in a nonvolatile storage, and a second image that is to be recorded in the nonvolatile storage; and
generation means (102) configured to generate verbal information that describes content of the second image based on the second image and on one or more first images that satisfy one or more conditions among the at least one first image.

2. The image capturing apparatus according to claim 1, wherein
the one or more conditions include a condition that the one or more first images have been shot within a first time period that includes a time of shooting of the second image.

3. The image capturing apparatus according to claim 1 or 2, further comprising
first determination means configured to determine whether each of the at least one first image includes a predetermined subject,
wherein the one or more conditions include a condition that each of the one or more first images includes the predetermined subject.

4. The image capturing apparatus according to claim 3, wherein
the one or more conditions include a condition that the one or more first images have been shot within a second time period, and
the second time period is a time period which includes a time of shooting of the second image, and in which the predetermined subject has been continuously detected.

5. The image capturing apparatus according to any one of claims 1 to 4, further comprising
second determination means configured to determine whether a degree of gaze of a user is equal to or higher than a first threshold with respect to each of the at least one first image,
wherein the one or more conditions includes a condition that the degree of gaze related to each of the one or more first images is equal to or higher than the first threshold.

6. The image capturing apparatus according to any one of claims 1 to 5, wherein
the shooting means is configured to cause the image capturing apparatus to transition to a state of preparation for shooting of the second image in response to a predetermined user operation performed on an operation member,
the one or more conditions include a condition that the one or more first images have been shot within a third time period, and
the third time period is a time period from a transition to a latest state of preparation for shooting before shooting of the second image.

7. The image capturing apparatus according to claim 6, wherein
the third time period is a time period from the transition to the latest state of preparation for shooting before shooting of the second image to shooting of the second image.

8. The image capturing apparatus according to claim 6 or 7, wherein
the operation member is a button that has a half-pressed state and a full-pressed state,
the predetermined user operation is a half-pressing operation on the button, and
the shooting means is configured to shoot the second image in response to a full-pressing operation on the button.

9. The image capturing apparatus according to any one of claims 1 to 8, further comprising
detection means configured to, in a case where a plurality of first images among the at least one first image satisfy the one or more conditions, detect a magnitude of change between two or more images among the plurality of first images and the second image,
wherein in a case where the change is smaller than a second threshold, the generation means generates the verbal information that describes the content of the second image based on the second image and on one or more first images remaining after removing a part of the plurality of first images.

10. The image capturing apparatus according to claim 9, wherein
a number of the part of the plurality of first images increases as the change decreases.

11. The image capturing apparatus according to claim 9 or 10, wherein
the detection means detects a magnitude of a motion of a subject in the two or more images as the magnitude of change between the two or more images.

12. The image capturing apparatus according to any one of claims 1 to 8, further comprising
detection means configured to, in a case where a plurality of first images among the at least one first image satisfy the one or more conditions, detect a magnitude of change between each of the plurality of first images and the second image, wherein
the generation means generates the verbal information that describes the content of the second image based on the second image and on one or more first images remaining after removing a part of the plurality of first images, and
the change exhibited by each of the part of the plurality of first images is smaller than a third threshold.

13. An image capturing apparatus (100), comprising:
shooting means (102) configured to shoot at least one live-view image and an image for recording; and
generation means (102) configured to generate verbal information that describes content of the image for recording based on the image for recording and on one or more live-view images that satisfy one or more conditions among the at least one live-view image.

14. A control method executed by an image capturing apparatus, comprising:
shooting at least one first image that is not to be recorded in a nonvolatile storage, and a second image that is to be recorded in the nonvolatile storage; and
generating verbal information that describes content of the second image based on the second image and on one or more first images that satisfy one or more conditions among the at least one first image.

15. A control method executed by an image capturing apparatus, comprising:
shooting at least one live-view image and an image for recording; and
generating verbal information that describes content of the image for recording based on the image for recording and on one or more live-view images that satisfy one or more conditions among the at least one live-view image.

16. A computer program comprising instructions which, when the program is executed by a computer, cause the computer to carry out the control method of claim 14.

17. A computer program comprising instructions which, when the program is executed by a computer, cause the computer to carry out the control method of claim 15.
